# EUROPEAN PATENT APPLICATION

(11) **EP 2 119 482 A1**
(43) Date of publication of application: **18.11.2009**
(21) Application number: 08251694.9
(22) Date of filing: 14.05.2008
(51) Int. Cl.: A63F 13/12

(54) **Network enabled toy**

(71) Applicant: BRITISH TELECOMMUNICATIONS public limited company, London EC1A 7AJ (GB)
(72) Inventor: Trimby, Martin William, Suffolk, IP13 9BA (GB); Tan, Kee Leong, 43000 Kajang, Selangor (MY); Hiew, Chun Fatt, 58200 Kuala Lumpur (MY); Wong, Zhen Ning, 57100 Kuala Lumpur (MY); Sithambaram, BHaranithraran, 53100 Kuala Lumpur (MY)
(74) Representative: Wilson, Peter David

(57) **Abstract**

A network enabled toy is in wireless communication with a local gateway, which is communication with a gaming platform via a broadband network. The software resources needed to operate the toy are split between the network enabled toy, the local gateway and the gaming platform.

## Description

The present invention relates to a toy and in particular to a toy that can be connected to a communications network to alter or enhance its capabilities.

Recent advances in electronics has lead to children's' toys to be developed that incorporate increased levels of technology. The parallel development of the internet, and its adoption by consumers, has also lead to these toys having some limited capabilities to interact with communications networks. Examples of such toys may be found in, for example, US 5 873 765, US 6 012 961 & US 6 676 477. It is also well known to use games consoles, such as Playstation 3 or Xbox 360, for on line collaborative or competitive game playing.

According to the present invention there is provided a communications network comprising a gaming platform, the gaming platform being in communication with a user gateway, the user gateway being connected to the communications network and, in use, also being in communication with a gaming device. In response to a request from the gaming device, gaming software may be transmitted from the user gateway to the gaming device. Preferably the user gateway transmits game logic data to the gaming device. The user gateway may store game content data within the user gateway, such that the content can be played back to a user in response to a subsequent request from the gaming device.

The present invention allows network enabled toys to be used by integrating them with equipment that is already present in many homes, such as a broadband router. The lack of processing capability in the network enabled toy can be compensated for by handing off some tasks either to the user gateway or to the gaming platform, which is connected to the user gateway via, for example, a DSL-based broadband network. The present invention allows the network toy to be relatively cheap and simple whilst using the capabilities of existing equipment and networks to provide game play between users who are not co-located.

The present invention also provides the further advantage that a toy manufacturer may sell a toy for stand alone use that has a defined set of capabilities. By connecting such a toy to a network according to the present invention it is possible to enhance the capabilities of the toy through providing online play. It is also possible to provide software to the toy to allow for new and/or enhanced game play, which may also endure when the toy is no longer connected to the network.

Embodiments of the present invention will now be described, by way of example only, with reference to the accompanying drawings in which:
Figure 1 shows a schematic depiction of a system according to an aspect of the present invention;
Figure 2 shows a schematic depiction of the functional components of a network enabled toy according to another aspect of the present invention;
Figure 3 shows a schematic depiction of a game logic vault according to an aspect of the present invention; and
Figure 4 shows a schematic depiction of a method according to the present invention by which a GLV may be deployed to a gaming platform, a gateway or a network enabled toy.

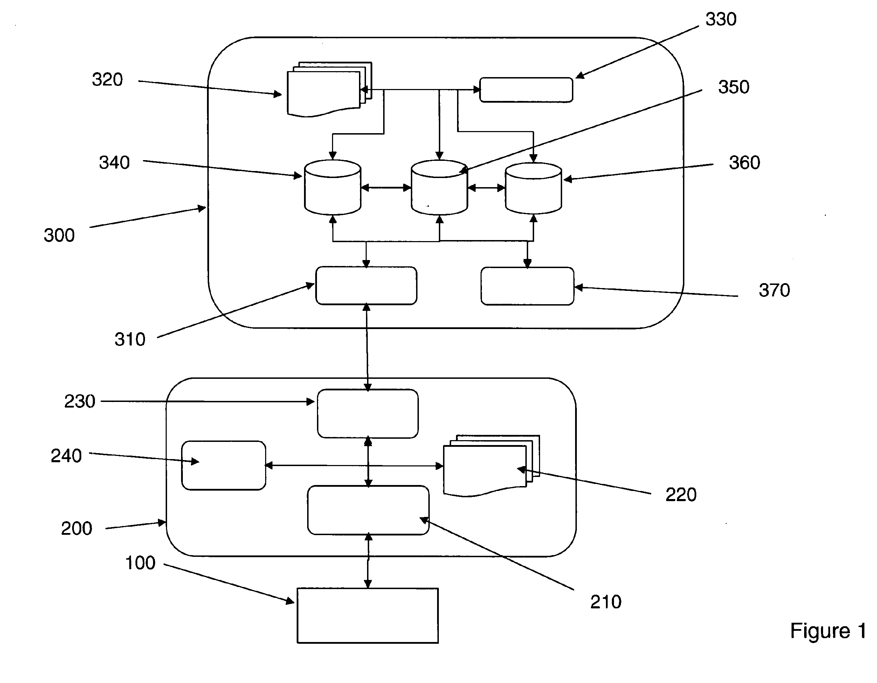

Figure 1 shows a schematic depiction of a system according to an aspect of the present invention. The system comprises a network enabled toy 100, a gateway 200 and a gaming platform 300. Conventionally, the gateway 200 is co-located with the network enabled toy 100 and is connected to the gaming platform 300 via a broadband network (or similar).

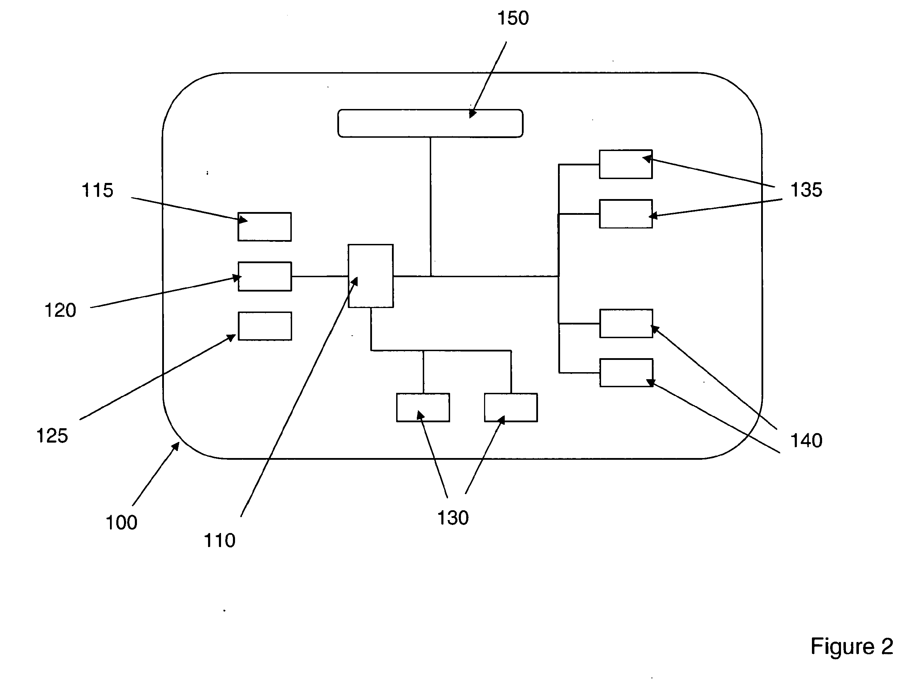

Figure 2 shows a schematic depiction of the functional components of a network enabled toy 100 according to another aspect of the present invention. The network enabled toy 100 comprises a processing unit 110, random access memory 115, fixed storage unit 120, removable storage unit 125 (for example Compact Flash, MMC, SD, XD cards, etc.), one or more sensor units 130 (for example GPS, gyroscope, clock, impact sensor, movement sensor, accelerometer etc.), one or more user input devices 135 (for example switches, buttons, voice detection, voice recognition, etc.), one or more user feedback devices 140 (for example display screen, lights, loudspeakers, force feedback units, etc) and a communications interface 150.

In use, one or more computer programs are stored on the fixed storage unit. These can be loaded into the random access memory for execution by the processing unit. The processing unit receives information from the one or more user input devices and/or the one or more sensor units to determine the operation of the game; data can be sent to the one or more feedback devices to inform a user of the status or progress of the game. The communications interface may be an integral component of the toy or it may be an additional component that can be inserted into a socket contained within the toy. Software to control the operation of the communications interface may be provided on the fixed storage unit or alternatively on a removable storage unit that can be inserted into the toy - such a storage unit may also comprise further computer software to provide additional functionality when the communications interface is inserted into the toy. The communications interface is preferably a wireless communications interface such as Bluetooth, WiFi or IrDA but may comprise a wired connection. The toy comprises a fixed functionality set when not connected to a gaming platform via a gateway. When connected to a gaming platform then the toy comprises a second functionality set that is extensible and can be user modified.

Although Figure 1 shows only a single network enabled toy, it will be apparent from the following description that a plurality of network enabled toys may be connected to the gateway in order to provide collaborative or competitive game play to a number of co-located players. Alternatively, one or more players could be located at a number of different locations and gaming data is routed between the associated gateways via one or more gaming platforms to provide the collaborative or competitive game play.

Referring to Figure 1, it can be seen that the gateway 200 comprises a communications interface 210, one or more game logic vaults 220 and a game manager client 230. The gateway provides an interface between the network enabled toy 100 and the gaming platform, preferably via a broadband network. The communications interface 210 is capable of communicating with the communications interface 150 of the network enabled toy, preferably using an appropriate wireless protocol.

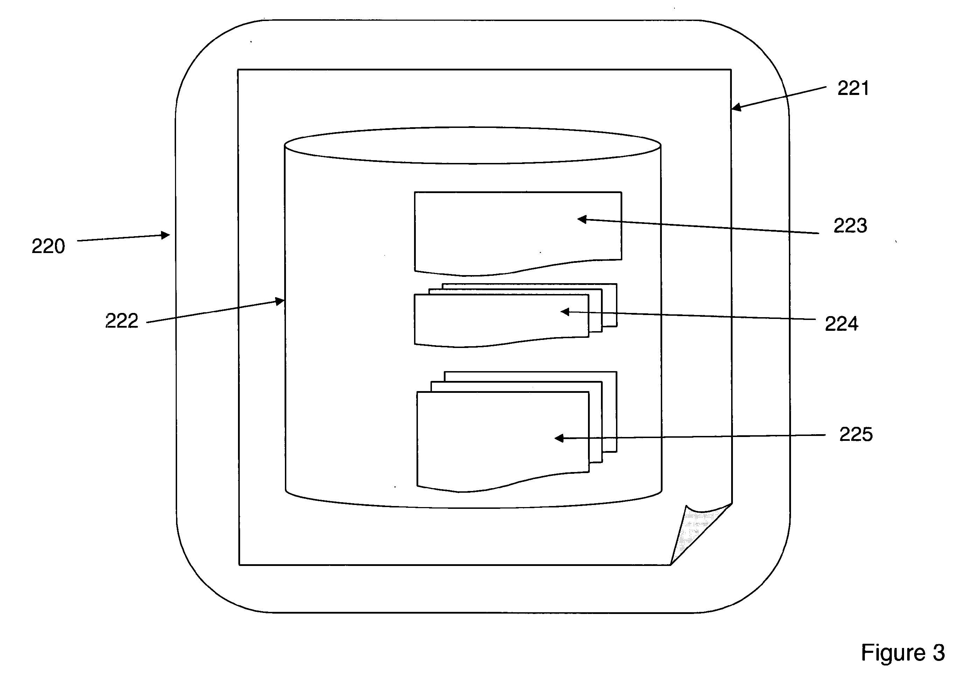

Figure 3 shows a schematic depiction of the game logic vault. The game logic vault (GLV) 220 comprises data which relates to game-play, game dependencies, player and setup settings. Figure 3 shows a schematic depiction of the structure of a GLV 220 which comprises an encryption layer 221, data archive 222, game logic 223, a plurality of XML files 224 and game dependency files 225. The contents of the GLV may be represented via a combination of compiled binary (eg: Java jar file) files, XML files, image, video and audio. The GLV comprises an encryption layer 221 to allow the content of the GLV to be protected against unapproved access and to enable easy and simple distribution of the GLV. The data archive 222 enables the various files that comprise the GLV to be collated into a single file . This simplifies the distribution, extraction and archiving of the files, whilst maintaining the file dependencies, links and related system information (for example directory structure, file formats, file creation dates, etc.) The game logic 223 comprises a compiled binary version of the game program. The game logic comprises the rules governing the game, the response of the toy to particular inputs, etc. In use, some or all of the game logic may be written to the network enabled toy to enhance the operation/capabilities of the toy. The XML files 224 comprise the configuration files that are accessed by the game logic to facilitate communication between the GLV and the gateway. This makes the GLV independent from the gateway such that a gateway is able to communicate with any GLV, as long as the GLV was developed in accordance to the appropriate APIs and standards. Using the information defined in the XML files, the gateway is able to be the link between the game logic and the gaming platform 300. The XML files further comprise user interface files that contain the various properties which determine the user interface (UI) that may be displayed to a user, via the gateway. For example, a file ui.xml, may allow the gateway to interpret the data from the game logic and then translate that to a UI rendered in English for display. By substituting a different UI file then the display may be rendered in a different language, for example Malay or Chinese. The game dependencies comprise additional data required by the game, for example the multimedia content which will be used by game logic to create the UI, such as libraries of graphics and audio assets. It can be seen that by separating the game logic, from the UI and the data used in the UI it is possible to update one of these items without needing to update either of the others. For example, the UI of a game may be updated without needing to modify the underlying game logic defining the game or the images, etc, that are used in the rendering the UI. A gateway may comprise one or more GLVs, with each GLV comprising data for one or more different games.

The game manager client 230 provides a range of different functionalities, one of which is providing communication with a game manager server 310, which is comprised within the gaming platform 300. The game manager client has an adaptive capability that enables it to be deployed across a range of different devices, such as a broadband router, set top box, media centre, mobile device, etc. The game manager client also acts as middleware, providing a set of APIs that allows the one or more GLVs to interface with the components in the gaming platform (see below) and to communicate with one or more network enabled toys. The game manager client also allows messages to be sent between the network enabled toy, the gateway and the gaming platform. As discussed above, the GLV may provide a UI for display to a user of a network enabled toy and the game manager client further comprises a display adaptation engine that controls the display of the UI in accordance with the hardware that is available for its display. The gateway further comprises a scoreboard which is able to render different UI themes (which may be based in a user selection, user generated content, geographical location base using a context awareness web service , etc.) to display the scores of one of more users for a range of games and/or user groups, based on data retrieved from the score server and the user profile database (see below).

Referring to Figure 1, there is also shown a schematic depiction of the gaming platform 300, which comprises a game manager server 310, one or more GLVs 320, a Parlay interface 330, score server 340, user profile server 350, media server 360 and context aware web service 370. The gaming platform is in communication with a plurality of gateways 200 via a broadband network connection, although for the sake of clarity only a single gateway is shown in Figure 1. The game manager server 310 provides an API that allows the gateway to communicate with the gaming platform and to interact with the other components of the platform. The game manager server allows new GLVs to be downloaded to and stored on the gaming platform by a GLV developer (see below) and also controls communications between the gaming platform (or gaming platform components) and other communications networks and entities. The gaming platform comprises a plurality of GLVs 320 which are available for download from the gaming platform to a gateway: the structure and function of the GLVs are as described above with reference to Figure 3.

The score server 340 comprises a database comprising score data for a number of different games and a number of different game players. Preferably the score server also comprises an API that enables the score data to be accessed from other networks, for example from the web or from a mobile telephone (or similar device). The user profile server 350 comprises a database that stores data relating to registered game players and is capable of interfacing with the Parlay interface such that the game player data may be accessed and/or updated from a user database from a telecommunications network or operator. The media server 360 stores multimedia data files for use by the gaming platform or one or more games, for example audio files for use in announcing user performance or ranking or user generated content, such as user photos for use in high score tables, user rankings, etc. The media server may also provide a real-time text to speech (TTS) capability. The context aware web service uses information such as user location, time, presence, use of particular games, etc. to provide appropriate context aware data extracted from the internet or a range of selected information and service providers.

It will be understood that a large ISP (internet service provider) may operate a number of gaming platforms such that a gateway may communicate with more than one of the gaming platforms in order to provide competitive or collaborative play between users who are not co-located. Furthermore, it should be possible for a gateway that is in communication with a gaming platform operated by a first ISP to also establish communication with a gaming platform operated by a second ISP (or other service/content provider) such that users can play across the commercial and/or organisational boundaries.

It is envisaged that a software development kit (SDK) for the GLV may be provided to third part developers and software producers. The GLV SDK will comprise the techniques and APIs required to allow a third party to develop new games and to develop and customise new and existing content for existing games. The APIs also enable communications between a network enabled toy, a gateway and one or more gaming platforms.

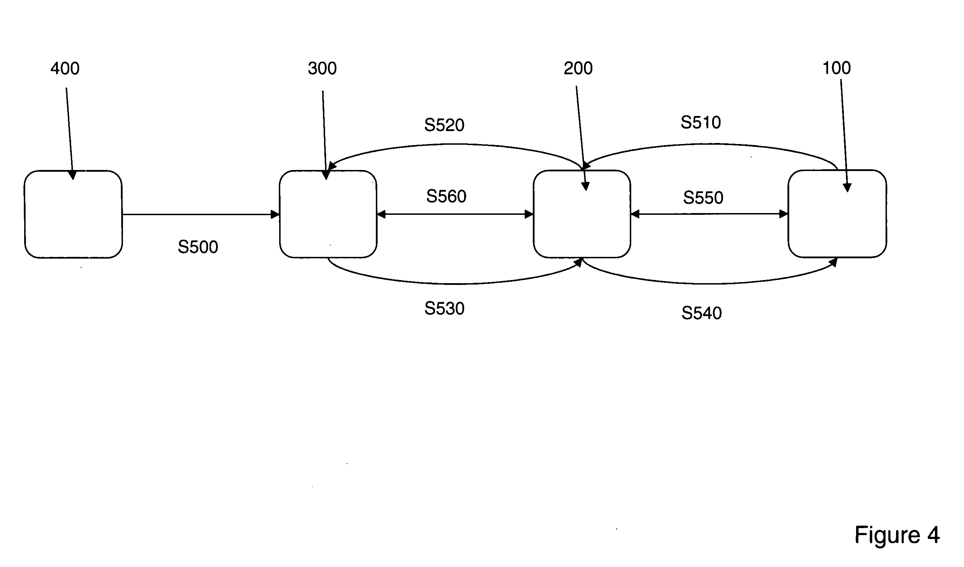

Figure 4 shows a schematic depiction of a method according to the present invention by which a GLV may be deployed to a gaming platform, a gateway or a network enabled toy.
Figure 4 shows a network enabled toy 100, a gateway 200, a gaming platform 300 and a GLV developer 400. Initially, a GLV developer develops a new GLV, comprising game logic, game dependencies and a plurality of XML files. At step S500 the GLV is uploaded to a gaming platform (in reality the GLV will be uploaded to a plurality of gaming platforms but for the sake of simplicity only a single platform is shown in Figure 4): the GLV may be designed to be played on either an existing network enabled toy or a new supported toy. The GLV is processed by the gaming platform to access the XML configuration files held within the GLV. These XML files are used to determine the actions that must be taken when a request is received to download the GLV to a gateway.

At step S510 a request to access a game is sent by a network enabled toy 100 to the gateway 200. This request may be due to a user requesting access to a new game for an existing network enabled toy or by registering a new network enabled toy with the gateway. If the gateway does not already hold the relevant GLV for that game then the gateway sends a request to the gaming platform (S520). If the request for a game is valid then the gaming platform sends the appropriate GLV to the gateway (step S530), in accordance with the XML configuration files extracted during step S500. The user profile in the user profile server is also updated to indicate that the user has subscribed to the game. If required, a message may be sent via the Parlay interface such that a charge can be made to a billing account.

The gateway extracts the XML files and game dependencies and stores these within the gateway. The gateway also extracts the game logic from the GLV and sends this to the network enabled toy (step S540), which stores the game logic in either the fixed or the removable storage unit. The toy can now be used with the additional functionality or game play provided by the game logic. During the playing of the game, the toy may need to access some of the data held within a game dependency file, and a request is sent to the gateway at step S550. The gateway will respond by returning the requested data so that, for example, an appropriate image can be displayed or a sound file played. Also, during the playing of the game the toy may send a request to the gateway (S550) that can only be fulfilled by the gaming platform, for example using the TTS functionality of the media server to play back a speech message at the toy that is not held as a pre-recorded audio file in the game dependency files. In such a case, the requested functionality is returned to the toy from the gaming platform, via the gateway. Periodically, or at the end of each game or game session, user data and/or score data will be passed from the toy to the gateway to enable the scoreboard to be updated; this data is also transmitted to the gaming platform so that the user profile server and the score server can be updated.

It will be understood that a network enabled toy may have one of a number of forms. It may come as a standalone toy to which the network functionality can be added by the addition of an appropropriate communications interface, or it may be supplied in a condition where it can communicate with a gateway. The toy may be supplied comprising the logic for one or more games which can be played immediately. Alternatively it may be necessary to send a request to the gateway of the gaming platform to download game logic or to provide a key or access code to enable a stored game logic to be accessed.

An example of the sort of toy that could be modified to be used with the present invention is the Bop It manufactured by Hasbro.

It will be understood that the performance of network enable toy may be emulated using an appropriate combination of hardware and software. For example, it would be possible to use a WiFi or Bluetooth enabled mobile telephone to connect to the user gateway locally. If a suitable connection can be made, for example using a high speed cellular network connection then it may be possible for a mobile telephone to connect to the user gateway remotely and to then interact with other users.

The network enabled toy may communicate with the gateway using a wireless communications protocol such as Bluetooth, WiFi, IrDA, etc. It is also possible for a wired connection to be used (for example using a USB connector) with the toy. The gateway may be a broadband router, such as the BT Home Hub, or an associated piece of equipment that is connected to a broadband network such as a BT Vision set top box. It will be understood that the functionality of the gateway is provided by the use of software and thus the gateway functionality may be provided by pushing a firmware upgrade to the device. It will be understood that software for enabling the gateway functionality may also be provided to a gaming console (such as a Playstation 3 or Xbox 360) or personal computer that is connected to a broadband network. If the network gateway has access to a display unit, such as a television or a PC monitor then this display unit may be used to display game scores, user data, or other data relating to game being played or a user. It will be understood that the present invention will be implemented as a program or software component that will be executed by a computer. Software implementing a method according to the present invention may be supplied on physical media (such as a USB drive, CD-ROM, DVD, etc) or supplied or made available for transfer or download via a communications network.

## Claims

1. A communications network comprising a gaming platform, the gaming platform being in communication with a user gateway, the user gateway being connected to the communications network and, in use, also being in communication with a gaming device.

2. A communications network according to claim 1, wherein, in use, in response to a request from the gaming device, gaming software is transmitted from the user gateway to the gaming device.

3. A communications network according to claim 2, wherein, in use, in response to the request from the gaming device, the user gateway transmits game logic data to the gaming device.

4. A communications network according to claim 2 or claim 3, wherein, in use, the user gateway stores game content data within the user gateway, the content being played back to a user in response to a subsequent request from the gaming device.

5. A communications network according to claim 2, wherein if the user gateway is unable to meet the request from the gaming device, the user gateway sends a request to the gaming platform wherein, in use, the gaming platform transmits the gaming software to the user gateway.

6. A communications network according to any of claims 1 to 5, wherein the gaming device comprises a storage device such that, in use, the gaming device receives game logic data from the user gateway, the game logic data being stored in the storage device.

7. A communications network according to claim 6, wherein the gaming device further comprises a removable storage means, wherein the removable storage means comprises game logic data.

8. A communications network according to claim 6 or claim 7, wherein the gaming device further comprises a processing unit for, in use, executing the game logic data.

9. A communications network according to any of claims 1 to 8, wherein the gaming device further comprises a wireless communications interface for, in use, communicating with the user gateway.

10. A communications network according to claim 9, wherein the user gateway comprises a wireless communications interface for, in use, communicating with the gaming device.

11. A communications network according to Claim 10, the user gateway further comprising one or more software repositories, wherein the or each software repository comprises data for one or more games.

12. A communications network according to Claim 11, wherein the or each software repository comprises configuration data for one or more games.

13. A communications network according to Claim 11 or claim 12, wherein the or each software repository comprises content data for one or more games.

14. A communications network according to any of claims 1 to 14, wherein the gaming platform is in communication, in use, with a user gateway via a broadband network.

15. A communications network according to any of claims 1 to 15, wherein the gaming platform further comprises an interface for, in use, communicating with a telecommunications network.

16. A communications network according to any of claims 1 to 15, the gaming platform further comprising one or more software repositories, wherein the or each software repository comprises data for one or more games.

17. A communications network according to Claim 16, wherein the or each software repository comprises configuration data for one or more games and content data for one or more games.

18. A method of providing data over a communications network, wherein the network comprises: a gaming platform; a user gateway connected to the communications network; and a gaming device in communication with the user gateway the method comprising the step of transmitting gaming software from the user gateway to the gaming device in response to a request from the gaming device.

19. A computer program product, comprising computer executable code for performing a method according to Claim 18.
